Europäisches Patentamt

(19) European Patent Office

Office européen des brevets

(11) Publication number. **0 156 598**

**A1**

(12) # EUROPEAN PATENT APPLICATION

(21) Application number: 85301789.5

(22) Date of filing: 14.03.85

(51) Int. Cl.⁴: **G 06 F 15/68**
**G 06 F 15/62**

(30) Priority: 14.03.84 GB 8406587

(43) Date of publication of application:
02.10.85 Bulletin 85/40

(84) Designated Contracting States:
AT BE CH DE FR GB IT LI LU NL SE

(71) Applicant: BRITISH TELECOMMUNICATIONS plc
British Telecom Centre 81 Newgate Street
London EC1A 7AJ(GB)

(72) Inventor: Baines, Bernard Eric Jarvis
25 Tall Trees
Colchester Essex(GB)

(72) Inventor: Colles, John Mayne
The Old Rectory Church Lane Bromeswell
Woodbridge Suffolk(GB)

(72) Inventor: Thomas, Roy Michael
12 Prospect Place Melton Hill
Woodbridge Suffolk(GB)

(72) Inventor: Spriggs, Hugh
49 Penzance Road Kesgrave
Ipswich Suffolk(GB)

(74) Representative: Lloyd, Barry George William et al,
Intellectual Property Unit British Telecom Room 1304
151 Gower Street
London WC1E 6BA(GB)

(54) Image processing.

(57) An image processing apparatus has a frame store (0) for storing a matrix of digital words each representing the brightness or colour of a picture element of a stored image. Image enhancement, which may be used in conjunction with a method for enlarging or reducing the image is provided by processing means (6) arranged, for each element, to compare the value of the corresponding word with those corresponding to the image elements adjacent in a selected direction (or both coordinate directions) and, if it lies between the adjacent values to change its value by amount of the same sign as, and dependent on, its deviation from the means of the adjacent values.

The invention may be used in still frame editors.

FIG.1.

IMAGE PROCESSING

The present invention is concerned with image processing apparatus, in which a frame store is provided for storing a matrix of digital words each representing the brightness or colour of a picture element of a stored image.

Although of general application, the invention finds particular application in the context of a still frame editor - suitable for example for the preparation of material for a photovideotex system.

According to one aspect of the present invention there is provided image processing apparatus having a frame store for storing a matrix of digital words each representing the brightness or colour of a picture element of a stored image, and processing means for image enhancement, arranged in operation, for each element to compare the value corresponding word with those corresponding to the image elements adjacent in a selected direction, and, if it lies between the adjacent values to change its value by amount of the same sign as, and dependent on, its deviation from the mean of the adjacent values.

One embodiment of the invention will now be described, by way of example, with reference to the accompanying drawings, in which:

Figure 1 is a block diagram of a photovideotex editor embodying the invention;

Figure 2 and 3 are diagrams illustrating respectively reduction and enlargement methods employed in the editor of Figure 1; and

Figures 4a, b and c are diagrams illustrating an image enhancement method.

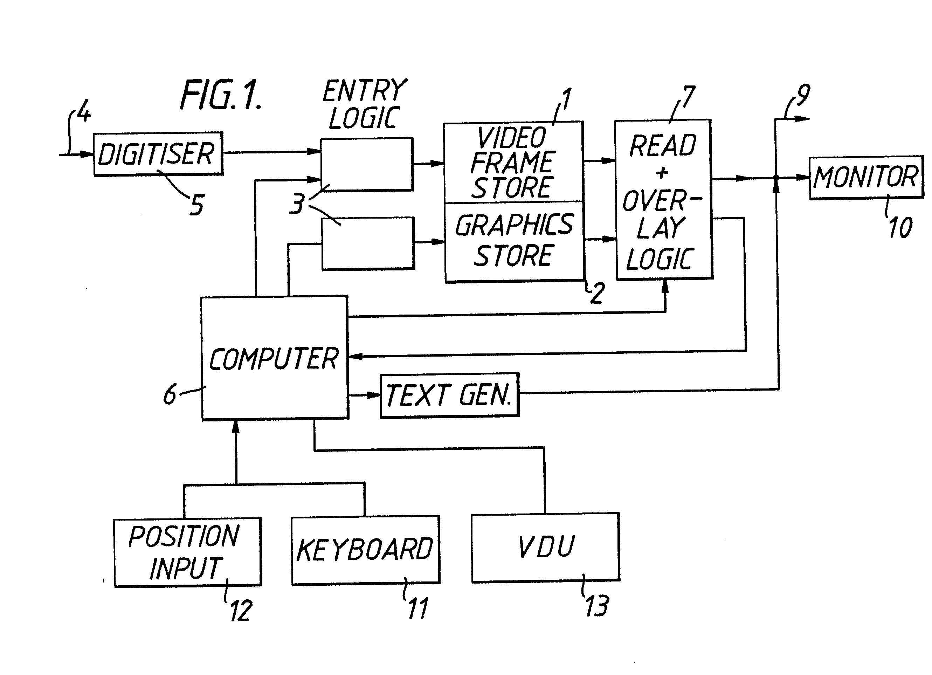

The still frame editor shown in Figure 1 comprises a video frame store 1 capable of storing one or more television frames; typically the store may have a capacity of 1 or 2 frames each consisting of 270x240 pixels. A graphics store 2 has the same spatial resolution, but reduced brightness resolution. It need not be physically distinct; in a prototype version each frame of the frame store provided twenty-four bits per pixel - eight bits each for the red and green planes and five bits for the blue, the remaining three bits providing a three (RGB) graphics planes with one bit per pixel. Such an arrangement is not in itself new, and a commercially available frame store (such as the Gresham Lion) could be used to provide the facilities indicated with the broken lines in Figure 1. Associated with the stores 1, 2 are entry logic 3 capable of entering a 'freezed-frame' into the frame store from an RGB and sync video input 4, via a video digitiser 5, or digital data into either store from a control computer 6: output logic 7 supplies selected data from the stores to the control computer 6 and a composite video signal to an output 9. The stores are digitally overlaid before being converted to RGB signals. A local monitor 10 is also shown.

Of course YUV storage for the video plane could be used rather than RGB with (for some applications) a reduction in storage requirement by reducing the spatial and/or intensity resolution of the colour difference components.

The control computer is provided with operator input/output devices eg keyboard 11, analogue input 12 (such as a joystick or pad or "mouse") and a VDU 13 (if the monitor 10 is not made to serve for the display of control information).

Elementary operations which can be carried out under control of the computer, when instructed by the operator are:

(i) Entry of a still frame, from a common or other video source connected to the video input 4, into the first frame store page.

(ii) transfer of a still frame or a part thereof from one frame store page to another or within the same page; its position in the destination frame being selectable.

(iii) entry of operator-input graphics into the graphics store (or transfer of graphics from backing storage such as magnetic disk).

(iv) transfer of graphics from the graphics store into a video store.

More sophisticated features are:

(a) a 'zoom' facility enabling a stored picture (or part of a picture) to be enlarged or reduced in size.

(b) a 'crispening' or image enhancement facility.

(c) a masking facility for selecting complex-shaped parts of an image for transfer or processing.

These will now be discussed in further detail.

Zoom facility. This could of course be done by applying a two-dimensional spatial filtering process to an $n \times m$ pixel area, to produce $k_1 n \times k_2 m$ pixel values (where $k_1$, $k_2$ are magnification factors in two coordinate directions). For the present function under consideration, viz. an editing terminal, the time taken for the apparatus to carry out any image processing step is significant, since if it is too slow it will be time-consuming and irksome for the operator. We have found that the time taken to carry out such spatial filtering is excessive for a colour image of the kind of resolution envisaged above, and propose a simpler solution in which pixel values are selected for omission or repetition (for reduction or enlargement respectively). Moreover, this solution employs only integer arithmetic, again speeding processing.

The criterion for omission of a pixel is that, if the zth pixel of a line of x pixels to be reduced to (or enlarged from) has an extent falling entirely within one of y equal divisions of the line, then it is omitted (repeated).

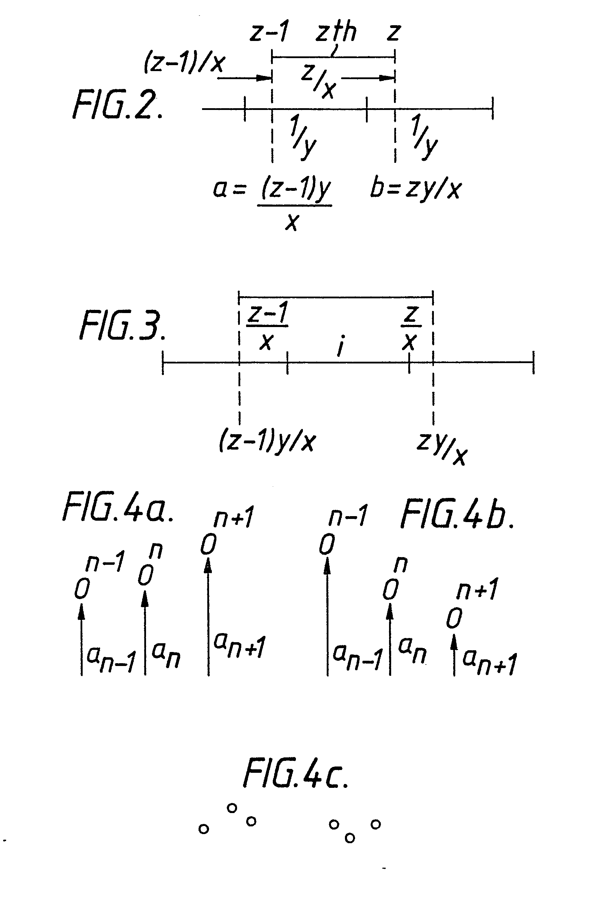

This is illustrated in Figure 2, where the extent of the zth pixel $(1 < z > x)$ of an x - pixel line of unit length is indicated, from $(z-1)/x$ to $z/x$. The number of pixels widths along the line of the new set is $a = (z - 1)y/x$ and $b = zy/x$ respectively. Note that a and b differ by $y/x$ ($<1$ for reduction) and are in general not integers. Inspection of Figure 2 shows that the zth pixel lies wholly with a y-division if the integer parts of a and b are equal, so that it is necessary to calculate only the integer values of a and b, and compare them to establish whether or not pixel z is to be omitted.

For enlargement, $y/x > 1$. If the integer parts of a and b differ by 2, then pixel i (Figure 3) in the enlarged picture falls entirely within pixel z and pixel z is repeated to provided pixel i.

The process is of course carried out horizontally for deletion/repetition of pixels along a line, and vertically for deletion/repetition of lines.

The following program, written in PASCAL, performs the 'shrink' process described. Certain procedures external to the program are first defined, followed by a procedure to produce a logical array indicating whether the corresponding picture element or line is to be omitted (ie a=b above), and the main shrink procedure. This latter can be called in order to shrink a picture of (say) 270x240 pixels down to 90x80 (assuming the top left-hand corner to be at 45,31) by a statement in a control program: shrink (45,31,270,240,90,80).

The program now follows:

```
PROGRAM small (INPUT, OUTPUT);
VAR    store1,store2,store3:ARRAY[1..arraysize] of INTEGER;
       testhorizontally,testvertically:ARRAY[1..arraysize]
       of BOOLEAN;


       [reads data horizontally from the frame store. It
       reads from line numbered 'line' starting at pixel
       c1, and reading c3 pixels]
PROCEDURE readhorizontally (VAR store:ARRAY[1..arraysize]
       of INTEGER;line,c1,c3:INTEGER) EXTERNAL;


       [writes data horizontally to the frame store. It
       writes to line numbered 'line' starting at pixel
       c1, and writes c3 pixels]
PROCEDURE writehorizontally(VAR store:ARRAY[1..arraysize]
       of INTEGER;line,c1,c3:INTEGER);EXTERNAL;


       [reads data vertically from the frame store. It
       reads from line numbered 'line' starting at pixel
       c1, and reading c3 pixels]
PROCEDURE readvertically(VAR store:ARRAY[1..arraysize]
       of INTEGER;line,c1,c3:INTEGER);EXTERNAL;
```

[writes data vertically to the frame store. It writes to line numbered 'line' starting at pixel c1, and writes c3 pixels]

```
PROCEDURE writevertically(VAR store:ARRAY[1..arraysize]
        of INTEGER;line,c1,c3:INTEGER); EXTERNAL;
```

[This is the bit that produces the array for the test as to whether a line or pixel is to be accepted or rejected.new is the new number of lines(or pixels)]

```
PROCEDURE shrinktest(VAR test:ARRAY [1...arraysize] of
BOOLEAN;new,old:INTEGER);
VAR pixel,previouspixel,i:INTEGER;
BEGIN
pixel=0
FOR j:=1 TO old DO
BEGIN
        previouspixel:=pixel;
        pixel:=(j*new)DIV old;
        [test is TRUE if pixel is not equal to
        previouspixel, otherwise FALSE]
          test [j]:=(pixel <> previouspixel)
END;
END;
```

[Shrinks the defined area from being c3 pixels by c4 lines down to being newx pixels by newy lines. Note that the top left hand corner is at c1, c2 and is common to both the original and the final picture.]

```
PROCEDURE shrink(c1,c2,c3,c4,newx, newy:INTEGER);
VAR   pixel,newpixel,line,newline,colour:INTEGER;
```

```
BEGIN
        [Produce arrays which indicate if a certain line is
        to be accepted or rejected]
shrinktest(testhorizontally,newx,c3);
shrinktest(testvertically,newy,c4);
FOR line:=1 TO c4 DO
BEGIN
        [ decides if a line is to be accepted or not]
IF testvertically[line] THEN
        BEGIN
                readhorizontally(stored1,(line+c2-1),c1,c3);
                newpixel:=0
                FOR pixel:=1 TO c3 DO
                BEGIN
                        [decides if a pixel on a line is to be
                        accepted or not]
                        IF testhorizontally[pixel]THEN
                        BEGIN
                            newpixel:=newpixel+1;
                            store1[newpixel]:=store1[pixel]
                        END
                END;
                newline:=newline+1;
                writehorizontally(store1,(newline+c2-1),c1,
                newpixel);
        END
END
```

The enhancement or "crispening", facility is intended to improve the apparent definition of an indistinct image - for example where it has been enlarged as described above, or where the source material is of poor quality. Again spatial filtering using transversal techniques could be used, but is slow.

.. 8 ..

The method proposed is as follows. Consider a pixel n (Figure 4), with its amplitutde $a_n$ (which could be the Y, U, V, R, G or B value: clearly in a colour system the process must be carried out 3 times for the three components). Adjacent pixels n+1, n-1 have amplitudes $a_{n+1}$, $a_{n-1}$. If, as shown in Figure 4a, the graph of a against n is concave (ie the second derivative is positive) the value of $a_n$ is reduced. If on the other hand it is convex (the second derivative is negative) (Figure 4b) an is increased. If a maximum or minimum is observed (Figure 4c)d no change is made. In analogue terms, this effectively increases the h.f. component of the image, so that the 'rounded' waveform of Figure 4d is sharpened as shown in Figure 4e. Thus $a_n$ is changed to a value of (1-k) an or (1+k) an respectively where k is a factor determining the magnitude of the resultant effect. However, the change is 'clamped', in that if an was between an-1 and an+1, it is not permitted to fall below or rise above either an+1 or an-1. This discrete approach, as well as having the advantage of speed, also avoids the generation of noise on the picture due to undershoot or overshoot. Naturally this process can be carried out in both directions.

A suitable program is as follows:

```
PROGRAM crisp(INPUT,OUTPUT)
VAR store:ARRAY[1  arraysize]of INTEGER;value:INTEGER;
        [EXTERNAL procedures are as above]


        [This is the routine that crispens a line]
PROCEDURE  crisp  (VAR   store:ARRAY[1..arraysize]  OF
INTEGER;xsize, factor : INTEGER).
VAR i,pixel1,pixel2,pixel3,dif1,dif2,correction,high,low,
newpixel:INTEGER
```

```
BEGIN
pixel2:=store[1];
pixel3:=stores[2];
dif2:=pixel2-pixel3;

FOR i:=2 TO xsize-1 DO
BEGIN
        [Set up variables for the correct three pixels]
        pixel1:=pixel2;
        pixel2:=pixel3;
        pixel3:=store [i+1];
        dif1:=-dif2;
        dif2:=pixel2-pixel3;
        [If dif1*dif2<0, it is not a maximum or a minimum
        point, and so a correction is made. The normal
        crispen routine merely works out the correction as
        the multiplication of the factor with the sum of
        the two differences. All the rest of the routine
is the conditions I apply to the crispen]
        IF            dif1*dif2<0            THEN
        correction:=(factor*(dif1+dif2))  DIV  100  ELSE
        correction:=0;

        newpixel:=pixel2+correction;

        IF correction <>0 THEN
        BEGIN [This bit clamps the central pixel between
                the two on either side of it. Note that if
                the middle point is not between the two on
                either side then it is a maximum or minimum
                and so should not be in this code]
```

```
            IF pixel>pixel3 THEN
            BEGIN
                    high:=pixel1;
                    low:=pixel 3
            END
            ELSE
            BEGIN
                    high:=pixel3;
                    low:=pixel1
            END
            IF newpixel>high THEN newpixel:=high
            ELSE IF newpixel<low THEN newpixel:=low END store [i]:=newpixel
    END
    END;


        [Crispens defined area]
PROCEDURE crispen (c1,c2,c3,c4,x:INTEGER);
VAR line,colour:INTEGER;
BEGIN
[This will crispen the picture going horizontally]
        FOR Line:=c2 TO (c2+c4-1) DO
        BEGIN
                readhorizontally(store, line, c1, c3);
                crisp(store, c3,x)
                writehorizontally(store, line, c1, c3)
        END;
[This will crispen the picture going vertically]
        FOR line:=c1 TO (c1+c3-1) DO
```

```
BEGIN
        readvertically(store, line, c2, c4);
        crisp(store, c4, x);
        writevertically(store, line, c2, c4)
END
END;
```

The crispen routine can be called up by:

```
BEGIN
WRITE ('input crispen factor');
READLN(value);
[The first two numbers define the top left hand
corner of the picture. The next is the width, and
the next the depth. The value is the amount it is
to be crispened]
crispen(100,100,100,100,value)
END
```

A useful feature of the editor to is selection of parts of an image. Here the operator uses the input device to enter into the graphic store an outline around the desired part; the outline being displayed simultaneously with the picture. Having thus defined an outline, an area may be defined by filling the outline (either from within or without), and can be used as a mask to remove unwanted parts of the image in the frame store, or to transfer selected parts to another frame. This is achieved by controlling the limits of an erasure or transfer process by reference to the contents of the graphics plane used for the mask.

0156598

## CLAIMS

1. Image processing apparatus having a frame store for storing a matrix of digital words each representing the brightness or colour of a picture element of a stored image, and processing means for image enhancement, arranged in operation, for each element to compare the value of the corresponding word with those corresponding to the image elements adjacent in a selected direction, and, if it lies between the adjacent values to change its value by amount of the same sign as, and dependent on, its deviation from the mean of the adjacent values.

2. Image processing apparatus according to claim 1 in which the change in value is proportional to the said deviation.

3. Image processing apparatus according to Claim 2 in which the processing means is arranged to limit the increase or decrease in value of a word such that it shall not lie outside the range defined by the adjacent values.

4. Image processing apparatus according to claim 1, 2 or 3 in which the processing means is arranged in operation to carry out the said comparison and value change procedure twice, with first and second mutually perpendicular selected directions.

5. Image processing according to anyone of the preceding claims including magnification or reduction means for producing a larger or smaller set of digital words representing an enlarged or reduced scale image by repetition or omission of selected words, the magnification or reduction means having means, arranged in operation to compute, for each element the integer part of the values of $(z-1)y/x$ and $zy/x$, where $x$ and $y$ are the number of elements in the original and processed image, measured in the direction in which magnification or reduction is to be made, and z is the number of the element in that direction, and to compare those integer parts to establish whether that corresponding word is to be selected for repetition/omission.

6.    Image processing apparatus according to any one of the preceding claims including store means having bit locations for each picture element, means for setting or resetting bit locations thereof, and means responsive to the state of those bit locations to set the corresponding words in the frame store to predetermined values.

7.    Image processing apparatus having a frame store for storing a matrix of digital words each representing the brightness or colour of a picture element of a stored image, store means having bit locations for each picture element, means for setting or resetting bit locations thereof, and means responsive to the state of those bit locations to set the corresponding words in the frame store to predetermined values.

8.    Image processing apparatus having a frame store for storing a matrix of digital words each representing the brightness or colour of a picture element of a stored image, and magnification or reduction means for producing a larger or smaller set of digital words representing an enlarged or reduced scale image by repetition or omission of selected words, the magnification or reduction means having means, arranged in operation to compute, for each element the integer part of the values of $(z-1)y/x$ and $zy/x$, where x and y are the number of elements in the original and processed image, measured in the direction in which magnification or reduction is to be made, and z is the number of the element in that direction, and to compare those integer parts to establish whether that corresponding word is to be selected for repetition/omission.

**FIG.1.**

DIGITISER (5) → ENTRY LOGIC (3) → VIDEO FRAME STORE (1), GRAPHICS STORE (2) → READ + OVER-LAY LOGIC (7) → MONITOR (10)

COMPUTER (6), TEXT GEN., POSITION INPUT (12), KEYBOARD (11), VDU (13)

Labels: 4, 9, 1/2, 0156598

FIG.2.

$$z-1 \qquad zth \qquad z$$

$$(z-1)/x$$

$$z/x$$

$$\frac{1}{y} \qquad \frac{1}{y}$$

$$a = \frac{(z-1)y}{x} \qquad b = zy/x$$

FIG.3.

$$\frac{z-1}{x} \qquad i \qquad \frac{z}{x}$$

$$(z-1)y/x \qquad zy/x$$

FIG.4a.

$$0^{n-1} \quad 0^{n} \quad 0^{n+1}$$

$$a_{n-1} \quad a_n \quad a_{n+1}$$

FIG.4b.

$$0^{n-1} \quad 0^{n} \quad 0^{n+1}$$

$$a_{n-1} \quad a_n \quad a_{n+1}$$

FIG.4c.

## DOCUMENTS CONSIDERED TO BE RELEVANT

| Category | Citation of document with indication where appropriate, of relevant passages | Relevant to claim | CLASSIFICATION OF THE APPLICATION (Int Cl 4) |
|---|---|---|---|
| X | EP-A-0 045 596 (XEROX)<br><br>* Page 2, lines 20-26; page 4, lines 12-33; page 6, line 8 - page 8, line 35; figure 2 * | 1-4,6-7 | G 06 F 15/68<br>G 06 F 15/62 |
| Y | | 5,8 | |
| | --- | | |
| X | PROCEEDINGS OF THE FOURTH INTERNATIONAL JOINT CONFERENCE ON PATTERN RECOGNITION, 7th-10th November 1978, Kyoto, pages 502-504, New York, US;<br>B.JUSTUSSON: "Noise reduction by median filtering"<br>* Page 502, left-hand column, line 28 - right-hand column, line 30 * | 1-3 | |
| | --- | | **TECHNICAL FIELDS SEARCHED (Int Cl 4)** |
| Y | | 5,8 | G 06 F 15/68<br>G 06 F 15/62 |
| | --- | | |
| Y | US-A-4 275 450 (XEROX)<br>* Column 2, lines 10-25; figures 1,4 * | 5,8 | |
| | ----- | | |

The present search report has been drawn up for all claims

| Place of search | Date of completion of the search | Examiner |
|---|---|---|
| THE HAGUE | 06-06-1985 | BURGAUD C. |